Europäisches Patentamt

European Patent Office  -

Office européen des brevets

(11) Publication number: **0 095 001**
**B1**

# EUROPEAN PATENT SPECIFICATION

(45) Date of publication of patent specification: **16.09.87**

(51) Int. Cl.⁴: **A 23 C 13/14**

(21) Application number: **82302689.3**

(22) Date of filing: **25.05.82**

(54) **Production of whipping cream.**

(43) Date of publication of application:
**30.11.83 Bulletin 83/48**

(45) Publication of the grant of the patent:
**16.09.87 Bulletin 87/38**

(84) Designated Contracting States:
**AT BE DE FR IT LU NL**

(56) References cited:
**CH-A- 526 920**
**DE-C- 951 410**
**FR-A-2 245 290**
**GB-A-1 094 268**
**US-A-3 809 765**

**THE AUSTRALIAN JOURNAL OF DAIRY
TECHNOLOGY, vol. 30, no. 1, March 1975,
pages 10-13; B.W. WILSON:"Techniques of
fractionation of milk fat"**

**Die Membran der Milchfettkügelchen (King),
Volkswirtschaflicher Verlag Kempten/Allgäu
1957, Seiten 10-21**

(73) Proprietor: **Bratland, Arthur
Brattlebridge House 97 Tooley Street
London, SE1 2RD (GB)**

(72) Inventor: **Bratland, Arthur
Brattlebridge House 97 Tooley Street
London, SE1 2RD (GB)**

(74) Representative: **Geering, Keith Edwin et al
REDDIE & GROSE 16 Theobalds Road
London WC1X 8PL (GB)**

Courier Press, Leamington Spa, England.

**Description**

This invention relates to the production of whipping cream.

Conventional whipping creams whip best at refrigerator temperatures, e.g. 4 to 6°C, not performing as well at higher temperatures. This temperature sensitivity is reduced somewhat with increase in the fat content of the cream, but increased fat content has the disadvantages of increased calorific content, reduced overrun (volume increase on whipping), and that buttering off or churning of the cream on whipping becomes a problem. In general, winter milk produces better whipping creams than summer milk, and diaries frequently produce a higher fat content (e.g. 38%) whipping cream in summer to achieve comparability with their winter cream (e.g. of 36% fat content).

The Australian Journal of Dairy Technology vol. 30 No. 1 March 1975 pages 10 to 13 discloses the use of a lower melting point butter oil fraction which is converted into a cream, the latter after homogenisation being mixed with fresh cream and churned to yield a spread; it gives no suggestion or teaching concerning the production of whipping cream. CH—A—526920 discloses details of milk fat fractionation, and indicates that selectively combined fractions can be used for making a variety of dairy products including creams, but there is no practical teaching for the successful consistent production of whipping cream. DE—C—951410 is concerned with producing artificial cream from a hard fat fraction, but proposes emulsification of this hard fat fraction at a temperature of 36 to 40°C.

By the method of the present invention it is possible to produce whipping creams of reduced temperature sensitivity, even at low fat content, obviating the need for fat content variations over the year and in general reducing the need for high fat content creams with their various disadvantages.

The present invention provides a method for the production of whipping cream which comprises separating butter oil into higher melting point and lower melting point fractions, emulsifying a high melting point fraction in water with a low fat milk fraction enriched in membrane substances to form an oil-in-water emulsion, and subjecting this emulsion to homogenisation and to pasteurisation or UHT treatment to form cream, characterised in that said emulsification is conducted at a temeprature of 50 to 60°C, and in that said cream is tempered by cooling it to refrigerator temperature and thereafter warming and re-cooling it to refrigerator temperature. This method can yield a satisfactory whipping cream of low fat content which whips well at relatively high temperatures near room temperature (e.g. 10—12°C or even about 15°C or higher).

By a low fat milk fraction enriched in membrane substances is meant an extract or mixture of extracts from milk or from liquid or solid emulsions derived from milk (e.g. cream, butter) and having a higher concentration of membrane substances than milk. Preferably, the high melting point butter fat fraction is emulsified with serum obtained by the separation of the initial unfractionated butter oil from milk or cream, but this serum may be wholly or partly replaced by other low fat milk fractions of enriched membrane substance content, e.g. acid or sweet butter milk or butter oil serum from another source, in original liquid form or made up from powder.

The butter oil fraction may be used in admixture with non-milk fat(s) to give filled products, examples of suitable non-milk fats being ground nut, coconut and palm kern oils.

The butter fractionation conducted according to the invention can for example be at between 15 and 25 or 30°C or even higher. At 20°C to 24°C, e.g. about 22°C, the fractionation often allows separation of about equal weights of the high and low melting point fractions.

For some purposes it may be advantageous to fractionate twice at different temperatures, e.g. at about 15°C and about 25°C, and to combine the highest and lowest melting point fractions obtained; this mixture can be suitable for forming, by the above-described method according to the invention, a low fat cream which may whip well at relatively high temperatures, e.g. up to room temperature. For the production according to the invention of a low fat (e.g. as low as 10%) whipping cream, however, it is generally preferred to employ the high melting point fraction of a relatively high temperature (e.g. about 28°C) butter oil fractionation.

Low fat cream made according to the invention using the high melting point butter fraction can be dried to a powder which is reconstitutable to cream (e.g. with water), e.g. whipping gream.

Suitable apparatus for the separation of butter oil into different melting point fractions is commercially available, e.g. the Alfa-Laval anhydrous milk fat fractionator. With such apparatus, the melting points of the fractions obtained can be varied at will, though in some cases adjustment of melting point and product properties may best be achieved, e.g. as indicated above, by mixing some of one fraction with another. Emulsification of the high melting point butter oil fraction with the aqueous fraction is conducted at about 50 to 60°C, e.g. 55°C, conveniently in an emulsion tank provided with a high speed mixer—e.g. a circulatory pump such as a centrifugal milk pump. Additional emulsifier(s) and/or stabiliser(s) may be incorporated for emulsion formation, but are not essential.

Creams made according to the invention (mainly when using a high melting point fat fraction) are subjected to a treatment which comprises homogenisation (preferably at a relatively high pressure e.g. 9.81 to 58,84 MPa—100 to 600 Kg/cm$^2$), then pasteurisation or UHT treatment, then (if needed or wanted e.g. for viscosity reduction) further homogenisation (preferably at lower pressure e.g. 2.94 to 9.81 MPa—30 to 100 Kg/cm$^2$). This procedure permits good control to be maintained over the viscosity, whippability, stability and taste of the final product, and is particularly advantageous in the case of low fat emulsions.

2

Lower fat emulsions generally need or allow higher temperature pasteurisation. However, the optimum homogenisation pressures (especially the first) and pasteurisation time and temperature may vary with the pH of the emulsion—which can for example be adjusted with dilute lactic acid; suitable conditions can be ascertained, for each given emulsion, by trial. Conventional piston homogenisers are suitably used, and the pasteuriser or steriliser may also be of conventional (e.g. plate heat exchanger or spiral tube/steam cylinder heat exchanger) type.

In order to achieve optimum properties (e.g. reliable whipping with improved whipped product firmness, stability and taste), especially in the case of low-fat creams, emulsions obtained according to the invention need to be tempered; this involves cooling the emulsion (usually to about refrigerator temperature, i.e. about 4 or 6°C, this being normal as the cream would usually be stored chilled), and then warming (generally to 20—32°C) and cooling it (again usually to about refrigerator temperature). The tempering may for example extend over a total period of about 2 hours. The maximum emulsion temperature may for example be 28°C.

All parts and percentages herein are by weight unless otherwise stated.

The following are specific Examples of the production of cream by the method of the invention, and are given by way of illustration only.

Example 1

A conventional 55% pasteurised cream was made from milk. This cream was then subjected to a complete phase inversion using a clarifixator to separate off butter oil with a fat content of approximately 99%. This was then fractionated by holding at 25°C until partial crystallisation occurred, then separated in a centrifuge to give high and low melting point fat fractions.

The high melting point fraction was emulsified with water and sweet cream buttermilk powder to give a cream containing about 20% fat and 7.8% non-fat milk solids. The emulsion was formed at about 55°C in an emulsion tank with a centrifugal milk pump, with the following proportions of ingredients:

| | |
|---|---|
| Butter fat | 39.87 parts by weight |
| Sweet Cream Buttermilk Powder | 17.41 parts by weight |
| Water | 142.72 parts by weight |

The pH of the cream was adjusted from 6.64 to 6.46, and the cream was then homogenised at 29.42 MPa (300 Kg/cm$^2$), pasteurised at about 109°C, and then homogenised again at 3.92 MPa (40 Kg/cm$^2$). The resulting cream, whilst slowly stirred in a vessel, was cooled to 4°C and then tempered by heating to 28°C and subsequently cooling again to 4°C. The pH adjustment in this Example, and in the practice of this invention in general, may be by the addition of dilute lactic acid, the addition of cultured buttermilk or skimmed milk, or by innoculation with lactic acid-producing culture. On whipping for 107 seconds at a starting temperature of 9.4°C and final temperature of 14.4°C, the tempered cream showed a stable overrun of 121% and the whipped product was firm and of excellent taste.

Example 2

Butter oil was obtained and fractionated as in Example 1 but at a fractionation temperature of 28°C. 5.15 Kg of the resulting high melting point fraction was emulsified as in Example 1 with 5.05 Kg of sweet buttermilk powder and 34.80 Kg of water to give a cream of pH 6.35 containing about 12% butter fat and about 10% non-fat milk solids. This was homogenised at 5.88 MPa (60 Kg/cm$^2$), pasteurised at about 120°C, cooled to 4°C and then tempered as in Example 1. The tempered cream when whipped for 210 seconds gave a stable, firm product of good taste with an overrun of 174%.

Example 3

Butter oil was obtained and fractionated as in Example 1 but at a fractionation temperature of 28°C. 6.53 Kg of the resulting high melting point fraction was emulsified as in Example 1 with 4.70 Kg of sweet buttermilk powder and 34.22 Kg of water to give a cream containing about 15 wt.% butter fat and about 9.3 wt.% non-fat milk solids, the cream pH being adjusted to 6.20/6.25 with lactic acid. The resulting cream was homogenised at 41.68 MPa (6000 psi, 425 Kg/cm$^2$), pasteurised at 265 to 270°C, then homogenised at 5.88 MPa (60 Kg/cm$^2$), and then cooled and tempered as in Example 1. Whipping characteristics of the product were in line with those from the other Examples.

Example 4

The procedure of Example 3 was repeated except that the emulsification was with 4.55 Kg of buttermilk powder, 6.55 Kg of the high melting point butter oil fraction, 9.32 Kg of sugar, and 25.05 of water, and that the tempering was at 32°C. Whipping characteristics of the product were in line with those of other Examples, the sugar content (as is generally the case in this invention) imparting good freeze-thaw stability.

**Claims**

1. A method for the production of whipping cream which comprises separating butter oil into higher melting point and lower melting point fractions, emulsifying a high melting point fraction in water with a low fat milk fraction enriched in membrane substances to form an oil-in-water emulsion, and subjecting this emulsion to homogenisation and to pasteurisation or UHT treatment to form cream, characterised in that said emulsification is conducted at a temperature of 50 to 60°C, and in that said cream is tempered by cooling it to refrigerator temperature and thereafter warming and re-cooling it to refrigerator temperature.

2. A method according to claim 1 characterised in that the emulsion is subjected to homogenisation at a pressure of at least 9.81 MPa (100 Kg/cm$^2$), then to pasteurisation or UHT treatment, and then if necessary or desired to further homogenisation at a pressure lower than that of the first homogenisation.

3. A method according to claim 1 or 2 characterised in that the low fat milk fraction enriched in membrane substances comprises buttermilk, whey, or butter oil serum from an independent source or obtained in the production of the butter oil from milk or cream.

4. A method according to any preceding claim characterised in that the high melting point butter fat fraction and low fat milk fraction are emulsified in admixture with non-milk fat.

5. A method according to any preceding claim characterised in that the high melting point butter fat fraction and low fat milk fraction are emulsified in admixture with sugar.

6. A method according to any preceding claim characterised by the step of adjusting the pH of the emulsion prior to homogenisation.

**Patentansprüche**

1. Verfahren zur Herstellung von Schlagobers, das folgende Schritte enthält: Trennung von Butteröl in eine Fraktion mit höherem Schmelzpunkt und eine Fraktion mit niedrigerem Schmelzpunkt, Emulgieren einer Fraktion mit hohem Schmelzpunk in Wasser mit einer fettarmen Milchfraktion, die mit Membransubstanzen angereichert ist, um eine Öl-in-Wasser/Emulsion zu bilden, und Aussetzen dieser Emulsion einer Homogenisierung und Pasteurisierung oder einer UHT-Behandlung, um Obers zu bilden, dadurch gekennzeichnet, daß die Emulsionsbildung bei einer Temperatur von 50 bis 60°C durchgeführt wird, und daß das Obers dadurch getempert wird, daß es auf Kühlschranktemperatur abgekühlt, darauf erwärmt und wieder auf Kühlschranktemperatur abgekühlt wird.

2. Verfahren gemäß Anspruch 1, dadurch gekennzeichnet, daß die Emulsion einer Homogenisierung bei einem Druck von zumindest 9,81 MPa (100 kg/cm$^2$) unterworfen wird, dann einer Pasteurisierung oder UHT-Behandlung und, falls notwendig oder gewünscht, einer weiteren Homogenisierung bei einem Druck unterworfen wird, der kleiner als bei der ersten Homogenisierung ist.

3. Verfahren gemäß Anspruch 1 oder 2, dadurch gekennzeichnet, daß die fettarme Milchfraktion mit Membransubstanzen angereichert wird, die Buttermilch, Molke oder Butterölserum enthalten, die man von einer unabhängigen Quelle oder bei der Herstellung des Butteröles aus Milch oder Obers erhält.

4. Verfahren gemäß jedem der bisherigen Ansprüche, dadurch gekennzeichnet, daß die Butterfettfraktion mit hohem Schmelzpunkt und die fettarme Milch-Fraktion in einer Mischung mit nichtmilchartigem Fett emulgiert werden.

5. Verfahren gemäß jedem der bisherigen Ansprüche, dadurch gekennzeichnet, daß die Butterfettfraktion mit hohem Schmelzpunkt und die fettarme Milchfraktion unter Beimischung von Zucker emulgiert werden.

6. Verfahren gemäß jedem der bisherigen Ansprüche, dadurch gekennzeichnet, daß der Schritt, bei dem der pH-Wert der Emulsion eingestellt wird, vor der Homogenisierung erfolgt.

**Revendications**

1. Procédé de production d'une crème à fouetter qui comprend les fait de séparer l'huile du beurre en des fractions d'un point de fusion plus élevé et d'un point de fusion dans l'eau avec une fraction de lait pauvre en graisse enrichi en substances membraneuses pour former une émulsion huite-dans-eau, et de soumettre cette émulsion à un traitement d'homogénéisation et de pasteurisation ou UHT pour former une crème, caractérisé en ce qu'on effectue ladite émulsification à une température de 50 à 60°C et en ce qu'on tempère ladite crème en la refroidissant à la température du réfrigérateur et ensuite en la réchauffant et en la refroidissant de nouveau à la température du réfrigérateur.

2. Procédé selon la revendication 1, caractérisé en ce qu'on soumet l'émulsion à l'homogénéisation sous une pression d'au moins 9,81 MPa (100 kg/cm$^2$), puis on effectue la pasteurisation ou le traitement UHT, et ensuite, si nécessaire ou souhaitable, on effectue une nouvelle homogénéisation sous une pression plus basse que celle de la première homogénéisation.

3. Procédé selon la revendication 1 ou 2, caractérisé en ce que la fraction de lait pauvre en graisse enrichi de substances membraneuses comprend du babeurre, du petit lait ou du sérum d'huile de beurre provenant d'une source indépendante ou qu'on obtient dans la production d'huile de beurre à partir du lait ou de la crème.

4. Procédé selon l'une quelconque des revendications précédentes, caractérisé en ce qu'on émulsifie la

4

fraction grasse de beurre à haut point de fusion et la fraction du lait pauvre en graisses en mélange avec une graisse ne provenant pas du lait.

5. Procédé selon l'une quelconque des revendications précédentes, caractérisé en ce que la fraction grasse de beurre à haut point de fusion et la fraction de lait à bas point de fusion sont émulsifiées en mélange avec du sucre.

6. Procédé selon l'une quelconque des revendications précédentes, caractérisé par le stade de réglage du pH l'émulsion avant l'homogénéisation.